# EUROPÄISCHE PATENTSCHRIFT

(11) **EP 2 218 629 B1**
(45) Veröffentlichungstag und Bekanntmachung des Hinweises auf die Patenterteilung: **23.11.2011**
(21) Anmeldenummer: 10001375.4
(22) Anmeldetag: 11.02.2010
(51) Int. Cl.: B62D 7/20, B62D 17/00

(54) **Kraftfahrzeug mit längenveränderlicher Spurstange**
Motor vehicle with length-adjustable tie bar
Véhicule doté d'une barre de connexion variable en longueur

(30) Priorität: 13.02.2009 DE 102009008837
(43) Veröffentlichungstag der Anmeldung: 18.08.2010
(73) Patentinhaber: Audi AG, 85045 Ingolstadt (DE)
(72) Erfinder: Schmidhammer, Werner, 85098 Großmehring (DE)
(74) Vertreter: Patzelt, Heike Anna Maria

(56) Entgegenhaltungen:
- WO-A1-02/38433
- DE-A1-102004 053 727
- DE-U1-202008 001 978

## Beschreibung

Die Erfindung betrifft ein Kraftfahrzeug mit einer längenveränderlichen Spurstange.

Die Spurstange trägt ihren Namen, weil sie der Einstellung der Spur (Radspur) dient. Sie ist mit zumindest einem Rad, typischerweise mit beiden Rädern einer Achse, gekoppelt. Die Spurstange ist eine Vorrichtung, die beispielsweise Bestandteil einer Achsschenkellenkung eines Kraftfahrzeuges ist. In der Regel umfasst sie an ihren Enden als Kugelköpfe ausgebildete Gelenke, zwischen denen Verbindungselemente angeordnet sind, und diese Verbindungselemente können in ihrer Länge verändert und festgesetzt werden. Herkömmlicherweise werden die richtigen Vorspurwerte vor der Erstinbetriebnahme eines Kraftfahrzeugs eingestellt, indem die Gesamtlänge der Spurstange festgelegt wird. Genauso werden auch bei einer Reparatur des Kraftfahrzeugs gegebenenfalls die richtigen Vorspurwerte eingestellt. Zur Einstellung wird das Kraftfahrzeug auf eine Messbühne verbracht. Auf der Messbühne wird die Vorspur gemessen. Gemessen wird hierbei der Winkel, den das Rad zur Fahrtrichtung einnimmt. Die Definition der Vorspur beinhaltet, dass ein bestimmter Winkel festgelegt ist, der auf der Messbühne eingestellt wird.

Es ist bekannt, dass diese vorab eingestellte Spur nachträglich verändert werden kann. Im Stand der Technik sind hierfür Aktuatoren bereitgestellt, die in bestimmten Betriebszuständen des Kraftfahrzeugs eingesetzt werden, also Teil eines Fahrassistenzsystems sind. Die Aktuatoren (z. B. Stellmotoren) sind teuer.

Diesen Nachteilen tritt die DE 20 2008 001 978 U1 durch das Offenbaren einer längenverstellbaren Spurstange, welche selbsteinstellend ist, entgegen. Die längenverstellbare Spurstange ist zweigeteilt, nämlich in zwei Längenabschnitte, die zueinander verstellbar sind. Die Verstellung erfolgt bei Auftreten von gerichteten Kräften dadurch, dass sich eine Tellerfeder öffnet und so ein Volumenausgleich in einem Kolbensystem ermöglicht ist.

Bei der Spurstange aus der DE 20 2008 001 978 U1 ist eine Vorabeinstellung vor der Erstinbetriebnahme des Kraftfahrzeugs nicht notwendig, denn die Spur stellt sich automatisch so ein, wie es durch die Konstruktion der Spurstange vorgegeben ist. Dieser Vorteil wird durch den Nachteil erkauft, dass sich die optimale Länge der Spurstange erst nach einer längeren Betriebsdauer des Kraftfahrzeugs einstellt. Auch Störeinflüsse, z. B. Druck auf ein Rad beim Parkieren an einem Randstein, können sich auf die Spureinstellungen auswirken.

Die WO 02/38433 A1 befasst sich mit der Verwendung einer längenverstellbaren Spurstange, welche nicht selbsteinstellend ist. Mithilfe einer Messeinrichtung wird der Lenkwinkel an einem ersten Rad gemessen und der Messwert einem Mikroprozessor zugeführt. Dieser ermittelt dann, wie der optimale Lenkwinkel an einem zweiten Rad aussehen müsste, das mit dem ersten Rad über die längenveränderliche Spurstange gekoppelt ist. Der Mikroprozessor bewirkt dann die Längenveränderung der Spurstange derart, dass tatsächlich der optimale Winkel an dem zweiten Rad eingestellt wird. Die längenveränderliche Spurstange kann hierbei in einer Ausführungsform einen ersten Spurstangenteil aufweisen, der mit einem Kolbengehäuse gekoppelt ist und einen zweiten Spurstangenteil aufweisen, der mit einem Kolben in dem Kolbengehäuse gekoppelt ist. Der Kolben trennt zwei mit Hydraulikfluid gefüllte Räume in dem Kolbengehäuse voneinander. Diese werden aus einer nicht bezeichneten Zufuhreinrichtung mit Hydraulikfluid gespeist.

Es ist Aufgabe der Erfindung, wie bei der längenverstellbaren Spurstange aus der DE 20 2008 001 978 U1 unter Verzicht auf teure und viel Platz einnehmende Aktuatoren auf die aufwendige und mit Kosten einhergehende Einstellung der Spur vor Inbetriebnahme (oder Reparatur) des Kraftfahrzeugs verzichten zu können, hierbei aber eine Verbesserung gegenüber der längenverstellbaren Spurstange aus der DE 20 2008 001 978 U1 zu erreichen, insbesondere was die Schnelligkeit der Einstellung eines optimalen Zustands und auch die Flexibilität bei Nachkorrekturen angeht.

Diese Aufgabe wird durch ein Kraftfahrzeug mit den Merkmalen gemäß Patentanspruch 1 sowie ein Verfahren mit den Merkmalen gemäß Patentanspruch 4 gelöst.

Das erfindungsgemäße Kraftfahrzeug weist eine Spurstange auf, die wie bei der DE 20 2008 001 978 U1 zweigeteilt ist, nämlich einen ersten und einen zweiten Spurstangenteil umfasst. Bei der Erfindung ist der erste Spurstangenteil mit einem Kolbengehäuse gekoppelt und der zweite Spurstangenteil mit einem Kolben in dem Kolbengehäuse gekoppelt. Der Kolben ist so ausgestaltet, dass er sich unter bestimmten Umständen bewegen kann. Er trennt zwei mit Hydraulikfluid gefüllte Räume in dem Kolbengehäuse voneinander. Nun sind die beiden Räume über eine Leitung mit einem (z. B. elektrisch) steuerbaren Ventil miteinander verbunden. Das Kraftfahrzeug weist ferner eine Steuereinheit zum (elektrischen) Ansteuern dieses Ventils auf. Schließlich ist ein Sensor bereitgestellt, mit dem ein Messwert zu einer von dem Sensor messbaren Größe gewinnbar ist. Eigenschaft des Messwerts soll es sein, dass er durch die auf eines der Spurstangenteile wirkende Kraft bestimmt wird, so dass von dem Messwert auf die Kraft zurückgeschlossen werden kann bzw. durch Orientierung an dem Messwert eine bestimmte Kraft eingestellt werden kann, wobei hierfür nicht notwendig ist, dass aus dem Messwert unmittelbar ein numerischer Wert für die Kraft abgeleitet werden. Im einfachsten Fall ist der Sensor ein Kraftsensor. Zwar kann dieser die Spurstangenkraft besonders gut messen, wenn er direkt an einem der Spurstangenteile befestigt ist. Der Kraftsensor kann jedoch auch an benachbarten Bauteilen angebracht sein. Schließlich kann auch eine andere Art von Sensor verwendet werden, z. B. ein Drucksensor im Kolbengehäuse, denn dieser Druck ist unmittelbar proportional zu der wirkenden Kraft.

Die Messwerte des Sensors werden von der Steuereinheit ausgewertet, die mit dem Sensor gekoppelt ist. Die Auswertung besteht darin, dass in Abhängigkeit von solchen Messwerten des Sensors von der Steuereinheit festgelegt wird, wann sie ein Öffnen des Ventils bewirkt. Beim Öffnen des Ventils kommunizieren die beiden von dem Kolben getrennten Räume in dem Kolbengehäuse miteinander, und da ja eine Kraft gemessen bzw. ermittelt wurde, kann unter ihrer Wirkung Hydraulikfluid aus dem einen Raum über die Leitung zu dem anderen gedrückt werden. Dies geht mit einer Relativbewegung zwischen Kolben und Gehäuse einher, und diese Relativbewegung bewirkt die Änderung der Gesamtlänge der Spurstange.

Bei dem erfindungsgemäßen Kraftfahrzeug bewirkt also eine auf ein Spurstangenteil wirkende Kraft eine Veränderung der Länge der Spurstange. Durch das Ventil ist dafür gesorgt, dass nicht jede Kraft unmittelbar eine Veränderung der Länge der Spurstange bewirkt. Dadurch kann das System so ausgestaltet werden, dass eine Kraft bei geöffnetem Ventil eine Änderung der Gesamtlänge der Spurstange relativ schnell bewirkt.

Somit kann relativ bald nach der Erstinbetriebnahme des Kraftfahrzeugs durch die Steuereinheit vorgesehen werden, dass die Spur durch optimale Einstellung der Gesamtlänge der Spurstange eingestellt wird. Zu beachten ist, dass anders als bei herkömmlichen Systemen nicht auf einen vorgegebenen Winkel für die Spur eingestellt wird, sondern dass die Einstellung bewirkt, dass eine vorgegebene Kraft auf ein Spurstangenteil wirkt. Zudem ist auch eine Nacheinstellung relativ kurzfristig vornehmbar. Ferner kann in bestimmten Betriebszuständen des Kraftfahrzeugs ein kurzfristiger Eingriff erfolgen, indem das Ventil geöffnet wird und sich die Spur abermals ändert. Nach Beendigung des Betriebszustands kann die für den normalen Betrieb gewünschte Spurstangenkraft genauso erneut eingestellt werden.

Nicht in jedem Betriebszustand des Kraftfahrzeugs ist die auf die Spurstange ausgeübte Kraft repräsentativ für typische Kräfte, so dass nicht in jedem Betriebszustand der Kraftsensor Messwerte gewinnen muss und auch nicht in jedem Betriebszustand das Ventil geöffnet werden sollte. Bevorzugt wird durch zumindest einen weiteren Sensor eine Größe gemessen, durch die der Betriebszustand des Kraftfahrzeugs ermittelbar ist. Von dem weiteren Sensor werden Messwerte der Steuereinheit zugeführt, z. B. ist der weitere Sensor entweder direkt mit der Steuereinheit gekoppelt oder leitet seine Messwerte an eine andere Einheit, die über einen Datenbus mit der Steuereinheit verbunden ist und somit die Messwerte weiterleiten kann. Jedenfalls ist die Steuereinheit in der Lage, in Abhängigkeit von Messwerten des zumindest einen weiteren Sensors einen Zeitpunkt festzulegen, zu dem ein auszuwertender Messwert durch den Kraftsensor zu gewinnen ist und/oder einen Zeitpunkt festzulegen, zu dem das Ventil zu öffnen ist. Ein Beispiel für einen Betriebszustand, in dem Messwerte gewonnen werden sollten, ist die gleichmäßige Geradeausfahrt. Eine solche lässt sich daran erkennen, dass der Lenkwinkel dauerhaft auf einem bestimmten Wert bleibt, was durch einen entsprechenden Winkelmesssensor erfasst werden kann. Dass die Geschwindigkeit des Kraftfahrzeugs unverändert bleibt, kann durch eine Geschwindigkeitsmesseinrichtung ermittelt werden. Ein Beispiel für einen Betriebszustand, in dem das Ventil geöffnet werden sollte, ist eine Kurvenfahrt. Bei der Kurvenfahrt wirken relativ große Kräfte auf die Spurstange, und diese Kräfte können eben eine Änderung der Spurstangen besonders effektiv bewirken.

Das erfindungsgemäße Verfahren zum Einstellen der Radspur eines Kraftfahrzeugs umfasst die Schritte:
- Bereitstellen einer längenveränderlichen Spurstange, bei der die Längenänderung über einen selbsteinstellenden Mechanismus erfolgt, welcher blockierbar ist,
- Blockierthalten des Mechanismus und Gewinnen eines Messwerts, der von der auf die Spurstange wirkenden Kraft abhängig ist
- Aufheben der Blockade in Abhängigkeit von dem Messwert und dadurch Ermöglichen einer Längenänderung durch Selbsteinstellung.

Bevorzugt ist das Verfahren an einem Kraftfahrzeug mit den Merkmalen gemäß Patentanspruch 1 eingesetzt. Somit wird also die Längenänderung durch Sichbewegen des Kolbens in einem Kolbenraum bewirkt, wobei der Kolben hierbei ein Hydraulikfluid unter Wirkung der zumindest indirekt gemessenen Kraft von einer seiner Seiten über eine Verbindungsleitung zu der anderen Seite hin drückt, und wobei ein Blockieren dieses Mechanismus durch Schließen und/oder Geschlossenhalten eines Ventils in eben dieser Verbindungsleitung erfolgt.

Wie oben bereits ausgeführt, wird bevorzugt unmittelbar die auf die Spurstange wirkende Kraft gemessen. Typischerweise wird ausgewertet, ob die gemessene Kraft größer oder kleiner als ein Sollwert ist, wobei der Sollwert einem bestimmten ermitteltem Fahrzustand zugeordnet sein kann. Wird nicht die Kraft unmittelbar gemessen, lässt sich gleiches mit einem Sollwert für einen Messwert zu einer anderen Größe, z. B. zum Druck, durchführen. Die Abhängigkeit des Aufhebens der Blockade von dem Messwert besteht dann darin, dass je nach dem, wie sich der Messwert zum Sollwert verhält, die Blockade eben aufgehoben wird oder nicht.

Die Messwerte (insbesondere für die gemessene Kraft) bestimmen somit das Aufheben der Blockade. Dies kann sich darin widerspiegeln, dass der Zeitpunkt für den Beginn des Aufhebens der Blockade festgelegt wird. Alternativ oder zusätzlich wird aber insbesondere eine von der gemessenen Kraft abhängige Zeitdauer für das Aufheben der Blockade festgelegt, wobei eine solche Zeitdauer bei Vorherrschen der gemessenen Kraft eine sich dann einstellende Längenänderung bestimmt. Dieses Bestimmtwerden kann durch Verwendung von Kennfeldern erfolgen, in denen die Dauer des Aufhebens der Blockade in Abhängigkeit von der herrschenden Kraft festgelegt wird. Verschiedene Kräfte mögen eine unterschiedliche Längenänderung notwendig machen, damit die Spurstangenkraft optimal eingestellt wird. Verschiedene Kräfte bewirken jedoch auch eine unterschiedliche schnelle Längenänderung. Beides kann durch die Festlegung der Zeitdauer in einem Kennfeld berücksichtigt werden.

Wie bereits oben ausgeführt, erfolgt das Messen der Kraft bevorzugt unter vorbestimmten Betriebsbedingungen des Kraftfahrzeugs und/oder auch das Aufheben der Blockade unter vorbestimmten Betriebsbedingungen des Kraftfahrzeugs. Als Beispiel war oben genannt worden, dass eine Geradeausfahrt des Kraftfahrzeugs bei gleichmäßiger Geschwindigkeit als vorbestimmte Betriebsbedingung für das Gewinnen der Messwerte festgestellt wird, und dass das Aufheben der Blockade bei einer Kurvenfahrt erfolgt. Wird der Messwert mit einem Sollwert verglichen, kann ein zusätzlicher Sollwert vorgesehen sein, bei dessen Über- oder Unterschreiten nicht abgewartet wird, dass sich die vorbestimmten Betriebsbedingungen einstellen, also z. B. nicht eine Kurvenfahrt abgewartet wird, sondern die Blockade unmittelbar, sofort aufgehoben wird. Dies gilt insbesondere dann, wenn der Messwert für besonders hohe Kräfte steht, so dass eine Beschädigung der Spurstange oder anderer Bauteile des Kraftfahrzeugs zu befürchten ist.

Ist die Blockade einmal aufgehoben worden, kann überprüft werden, ob die Spurstangenkraft der gewünschten Spurstangenkraft entspricht. Gegebenenfalls kann die Blockade ein weiteres Mal aufgehoben werden, und zwar so oft, bis schließlich die gewünschte Spurstangenkraft herrscht.

Auf die Spurstange wirken Kräfte, die von dem Betriebszuständen des Kraftfahrzeugs abhängig sind. Es kann sich als vorteilhaft erweisen, bei bestimmten Betriebszuständen kurzfristig die Soll-Spurstangenkraft zu ändern. Somit erfolgt bei einer bevorzugten Ausführungsform eine Erfassung von Betriebszuständen des Kraftfahrzeugs und abermaliges Aufheben der Blockade bei bestimmten solchen Betriebszuständen.

So kann vorgesehen sein, dass die Grundeinstellung der Spurstangenkraft gerade dann erfolgt, wenn das Kraftfahrzeug nicht gebremst wird. Hingegen kann gerade eine kurzfristige Änderung der Spurstangenkraft beim Bremsen wünschenswert sein. Nach Beendigung des Bremsens kann dann der vorherige Zustand wiederhergestellt werden, also die Schritte des zumindest indirekten Messens der auf die Spurstange wirkenden Kraft und des Aufhebens der Blockade in Abhängigkeit von selbiger wiederholt werden. Bei dieser Ausführungsform wird davon ausgegangen, dass das Gesamtsystem in gewisser Hinsicht lernfähig ist, also das Steuergerät z. B. eine Information über den zuvor hergestellten Zustand aufgrund der Messwerte und aus dem von ihm selbst abgegebenen Steuerbefehlen an das Ventil ableitet, und dass dann zukünftige Befehlsausgaben an das Ventil unter Berücksichtigung dieser Information erfolgen.

Nach einer ersten Längenänderung der Spurstange sollte die Spurstangenkraft optimal eingestellt sein. Es gibt dann Betriebssituationen, die sich auch in einer erhöhten oder erniedrigten Kraft auf die Spurstange auswirken. Somit können weitere Messwerte mit dem Kraftsensor gewonnen werden und kann so auf bestimmte Betriebssituationen rückgeschlossen werden. Manche solche Betriebssituationen sollten dem Kraftfahrzeugführer bekannt gegeben werden, es sollten also bei bestimmten Eigenschaften der Messwerte von einem Führer des Kraftfahrzeugs wahrnehmbare Signale ausgegeben werden.

Beispielsweise kann eine Radunwucht anhand einer periodischen Änderung der auf die Spurstange wirkenden Kraft erkannt werden und dem Fahrzeugführer ein Werkstattbesuch durch ein Leuchtsignal empfohlen werden. Genau so kann ein Druckverlust im Reifen durch eine veränderte Achsschwingung festgestellt werden. Mithilfe des Kraftsensors kann auch festgestellt werden, wenn das Fahrzeug überladen ist, und es kann dann eine entsprechende Warnung ausgegeben werden.

Beeinträchtigungen des Kraftfahrzeugs können auch sowohl zu Warnsignalen als auch zu einem abermaligen Aufheben der Blockade führen. Beispielsweise kann eine Lenkradschiefstellung vorliegen, oder das Kraftfahrzeug kann schiefziehen. Ist an beiden Spurstangen (mit Spurstangenteilen), links und rechts, je ein Kraftsensor vorgesehen, kann ein Schiefziehen erkannt und durch ein Aufheben der Blockade ausgeglichen werden.

Da die Erfindung eine relativ schnelle Anpassung der Radspur ermöglicht, kann man diese auch durch Vorgaben des Kraftfahrzeugführers bestimmbar machen. Das sieht dann so aus, dass zunächst die Vorgabe des Führers des Kraftfahrzeuges erfolgt und dann nach gegebenenfalls indirekter Messung der auf die Spurstange wirkenden Kraft ein Aufheben der Blockade in Abhängigkeit von der gemessenen Kraft erfolgt, wobei eben eine solche Längenänderung ermöglicht wird, wie sie den Vorgaben entspricht. Je nach gewünschtem Fahrverhalten (Sport, Komfort,...) kann dann die Spurstangenkraft eingestellt werden. Die Vorgabe kann durch Mittel erfolgen, die nicht unmittelbar auf die Spur bezogen sind. Beispielsweise macht der Führer des Kraftfahrzeugs ein entsprechende Vorgabe durch Wahl der Stellung eines Schalthebels für eine Getriebeautomatik.

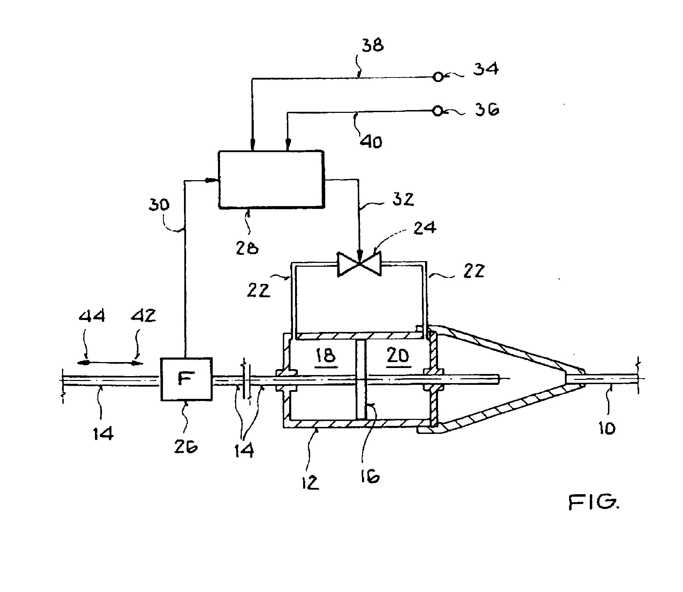

Nachfolgend wird eine bevorzugte Ausführungsform der Erfindung unter Bezug auf die Zeichnung beschrieben, wobei die einzige.
- Fig.: schematisch die Bestandteile einer Spurstangenvorrichtung bzw. eines Systems, das die Spurstangenvorrichtung umfasst, zeigt, wie sie bei einer Ausführungsform des erfindungsgemäßen Kraft- fahrzeugs vorgesehen sind.

Eine in der Figur schematisch dargestellte Spurstange ist an sich bekannter und daher in der Figur nicht dargestellter Weise mit zumindest einem Rad gekoppelt. Die Spurstange ist vorliegend zweiteilig ausgebildet, wobei die beiden Teile schematisch dargestellt sind. Ein erster Spurstangenteil 10 ist mit einem Kolbengehäuse 12 verbunden. Ein zweiter Spurstangenteil 14 ist mit einem Kolben 16 in dem Kolbengehäuse 12 verbunden. Der Kolben 16 trennt zwei Räume 18 und 20 in dem Kolbengehäuse 12 voneinander. Durch Bewegung des Kolbens 16 kann die Größe jeweils eines der Räume bei gleichzeitiger Verkleinerung des jeweils anderen der Räume geändert werden. In den beiden Räumen 18 und 20 befindet sich Hydraulikfluid. Die Räume sind über eine Verbindungsleitung 22 miteinander verbunden, in der ein Magnetventil 24 angeordnet ist. Das Magnetventil 24 ist im Grundzustand geschlossen. Wird es geöffnet, ist eine Bewegung des Kolbens 16 ermöglicht, es kommt zu einer tatsächlichen Bewegung des Kolbens 16, wenn eine Kraft auf die Spurstange 14 ausgeübt wird.

Das Ventil 24 wird nur unter vorbestimmten Bedingungen geöffnet.

Ein Kraftsensor 26 ist an dem zweiten Spurstangenteil 14 angeordnet; beispielsweise kann es sich um einen auf das zweite Spurstangenteil 14 aufgeklebten Dehnungsmessstreifen handeln. Die Messwerte des Kraftsensors 26 werden einer Steuereinheit 28 über eine Verbindungsleitung 30 zugeführt. Diese ist über eine Verbindungsleitung 32 mit dem Ventil 24 gekoppelt und kann dieses öffnen.

Weitere Sensoren 34 und 36 sind über jeweilige Verbindungsleitungen 38 und 40 mit der Steuereinheit 28 gekoppelt.

Beispielsweise misst der Sensor 34 den Lenkwinkel und der Sensor 36 die Geschwindigkeit des Kraftfahrzeugs. Vorliegend sei vorgesehen, dass der Kraftsensor 26 in kurzen Zeitintervallen wiederholt Messwerte an die Steuereinheit 28 sendet, bzw. die Steuereinheit 28 wiederholt einen Messwert von dem Kraftsensor 26 abfragt. Es wird eine Geradeausfahrt dadurch ermittelt, dass das Lenkrad, wie durch die Messwerte des Sensors 34 von der Steuereinheit feststellbar, unbeweglich bleibt. Gleichzeitig soll die Geschwindigkeit im Wesentlichen unveränderlich bleiben, was die Steuereinheit 28 aufgrund von Messwerten des Geschwindigkeitsmesssensors 36 feststellen kann. Zumindest bei Erstinbetriebnahme des Kraftfahrzeugs wertet die Steuereinheit 28 die von dem Kraftsensor 26 bei Geradeausfahrt des Kraftfahrzeugs mit gleichmäßige Geschwindigkeit gewonnen Messwerte aus, und prüft ob eine Spurstangenlängenänderung nötig ist.

Ist eine Spurstangenänderung nötig, wartet die Steuereinheit 28, bis das Kraftfahrzeug eine Kurve durchfährt. Bei einer Kurvenfahrt wirken besonders hohe Kräfte auf die Spurstange. Die Steuereinheit 28 macht Gebrauch von einem Kennfeld, in dem in Abhängigkeit von der von dem Kraftsensor 26 gemessenen Kraft eine Dauer der Öffnung des Ventils 24 festgelegt ist. Das Ventil 24 wird sodann (bei der Kurvenfahrt) für eine durch das Kennfeld festgelegte Zeitdauer geöffnet.

Das Verhalten ist hierbei deterministisch: Die vom Kraftsensor 26 gemessene Kraft drückt entweder den Kolben 16, wenn sie gemäß dem Pfeil 42 wirkt, mit einer vorbestimmten Geschwindigkeit in der Figur nach rechts und durchläuft so während der vorgegebenen Zeitdauer der Öffnung des Ventils 24 einen genau vorbestimmten Weg, oder der Kolben 16 wird aufgrund einer Kraft gemäß dem Pfeil 44 der Figur nach links gedrückt, wobei auch hier die Kraft die Geschwindigkeit und damit die durchlaufene Wegstrecke vorgibt. Unabhängig vom Vorzeichen der Kraft wird somit eine Spurstangenlängenänderung bewirkt, die genau durch das von der Steuereinheit 28 verwendete Kennfeld vorgegeben ist und somit von der auf die Spurstange wirkenden Kraft abhängig ist. Es ist hierbei davon ausgegangen, dass eine Fehleinstellung der Spur definiert bestimmt, welche Kraft auf die Spurstange wirkt und vom Kraftsensor 26 gemessen wird. So kann in Abhängigkeit von dem Messwert für diese Kraft auch entsprechend eine Spurstangenlängenänderung festgelegt werden.

Nach einem ersten Einstellen der Spurstangenlänge bei Erstinbetriebnahme des Kraftfahrzeugs ermöglicht es das System gemäß der Figur auch zu späteren Zeitpunkten noch, die Spurstange zu ändern. Dies kann zur Korrektur von einer Fehleinstellung erfolgen, z. B. im Rahmen einer Reparatur des Kraftfahrzeugs. Eine Fehleinstellung kann auch dadurch zustande kommen, dass die Räder des Kraftfahrzeugs gewechselt wurden, z. B. statt der bisherigen Sommerreifen die Winterreifen aufgezogen wurden. Schließlich kann eine Korrektur auch im Rahmen von bewussten Eingriffen zu Änderung der Spurstangenkraft bei bestimmten Betriebsbedingungen erfolgen. Kennzeichen des vorliegenden Verfahrens ist es, dass eine Einstellung auf eine gegebenenfalls situationsabhängige Sollkraft für die auf die Spurstange wirkende Kraft erfolgt. Dies unterscheidet sich vom herkömmlichen Einstellungen der Spur, die das Festlegen eines Sollwinkels impliziert. Vorliegend erfolgt die Einstellung auf einer Sollkraft auch nicht einmalig, sondern es wird mit Hilfe des Kraftsensors 26 regelmäßig die auf die Spurstange wirkende Kraft überprüft und durch Öffnen des Ventils 24 eine Anpassung durchgeführt. Wird ein anderer Reifen verwendet, so dass eine andere Kraft auf die Spurstange wirkt, so wird die Spur korrigiert. Gleiches gilt auch, wenn das Kraftfahrzeug beladen wird und sich durch die Beladung die Kraft auf die Spurstange ändert. Das Verfahren ist somit besonders flexibel.

Lassen sich die Sollkräfte nicht mehr einstellen, kann sogar eine Achsschädigung nach einem Unfall erkannt werden und eine entsprechende Warnung ausgegeben werden. Warnungen können auch in sonstigen Situationen ausgegeben werden, die mit Hilfe des Kraftsensors 26 erfasst werden, z. B. bei übermäßiger Beladung des Kraftfahrzeugs.

Eingestellt wird vorliegend immer auf eine Sollkraft, nicht auf einen Sollwinkel. D.h. die Einstellung erfolgt nicht einmalig, sondern wird kontinuierlich geprüft und immer wieder den Gegebenheiten angepaßt. Entwickelt ein anderer Reifen eine andere Kraft, so wird die Spur korrigiert. Gleiches gilt auch für Beladungszustände u.v.a.m.

## Patentansprüche

1. Kraftfahrzeug mit einer Spurstange, die einen ersten Spurstangenteil (10) und einen zweiten Spurstangenteil (14) umfasst, wobei der erste Spurstangenteil (10) mit einem Kolbengehäuse (12) gekoppelt ist und der zweite Spurstangenteil (14) mit einem Kolben (16) in dem Kolbengehäuse (12) gekoppelt ist, der zwei mit Hydraulikfluid gefüllte Räume (18,20) in dem Kolbengehäuse (12) voneinander trennt, **dadurch gekennzeichnet, dass** die beiden Räume (18,20) über eine Leitung (22) mit einem darin angeordneten steuerbaren Ventil (24) miteinander verbunden sind, wobei das Kraftfahrzeug ferner eine Steuereinheit (28) zum Ansteuern des Ventils (24) aufweist und ein Sensor (26) zum Erfassen eines Messwerts zu einer Größe, der durch die auf eines der Spurstangenelemente wirkende Kraft bestimmt wird, bereitgestellt ist, wobei der Sensor (26) mit der Steuereinheit (28) gekoppelt ist, um dieser solche Messwerte zuzuführen, so dass in Abhängigkeit von solchen Messwerten von der Steuereinheit (28) festlegbar ist, wann das Ventil (24) zu öffnen ist, damit unter Wirkung der auf das eine der Spurstangenteile wirkenden Kraft Hydraulikfluid aus einem Raum (18,20) in dem Kolbengehäuse (12) über die Leitung zu dem anderen Raum (20,18) gedrückt wird und hierbei eine Relativbewegung zwischen Kolben (16) und Gehäuse (12) unter Änderung der Gesamtlänge der Spurstange erfolgt.

2. Kraftfahrzeug nach Anspruch 1, mit zumindest einem weiteren Sensor (34, 36), von dem Messwerte der Steuereinheit (28) zuführbar sind, so dass die Steuereinheit (28) in der Lage ist, in Abhängigkeit von Messwerten des zumindest einen weiteren Sensors (34,36) einen Zeitpunkt festzulegen, zu dem eine auszuwertender Messwert durch den Sensor (26) zum Erfassen des durch die Kraft bestimmten Messwerts zu gewinnen ist und/oder einen Zeitpunkt festzulegen, zu dem das Ventil (24) zu öffnen ist.

3. Kraftfahrzeug nach Anspruch 1 oder 2 bei dem der Sensor zum Erfassen des durch die Kraft bestimmten Messwerts ein Kraftsensor (26) an einem der Spurstangenteile (14) ist.

4. Verfahren zum Einstellen der Radspur eines Kraftfahrzeugs, **gekennzeichnet durch** die Schritte:
- Bereitstellen einer längenveränderlichen Spurstange, wobei die Längenänderung über einen selbsteinstellenden Mechanismus erfolgt, welcher blockierbar ist,
- Blockierthalten des Mechanismus und Gewinnen eines Messwerts, der von der auf die Spurstange wirkenden Kraft abhängig ist,
- Aufheben der Blockade in Abhängigkeit von dem Messwert und **dadurch** Ermöglichen einer Längenänderung **durch** Selbsteinstellung.

5. Verfahren nach Anspruch 4, bei dem die Längenänderung durch SichBewegen eines Kolbens (16) in einem Kolbengehäuse (12) bewirkt wird, wobei der Kolben (16) hierbei ein Hydraulikfluid unter der Wirkung der gemessenen Kraft von einer seiner Seiten (18, 20) über eine Verbindungsleitung (22) zu der anderen Seite (20,18) drückt, und wobei ein Blockieren dieses Mechanismus durch Schließen und/oder Geschlossenhalten eines Ventils (24) in der Verbindungsleitung erfolgt.

6. Verfahren nach Anspruch 4 oder 5, bei dem das Aufheben der Blockade für eine von dem Messwert abhängige Zeitdauer erfolgt, die eine sich dann einstellende Längenänderung bestimmt.

7. Verfahren nach einem der Ansprüche 4 bis 6, bei dem Gewinnen des Messwerts der unter vorbestimmten Betriebsbedingungen des Kraftfahrzeugs erfolgt und/oder das Aufheben der Blockade unter vorbestimmten Betriebsbedingungen des Kraftfahrzeugs erfolgt.

8. Verfahren nach Anspruch 7, bei dem das Aufheben der Blockade unter ersten vorbestimmten Betriebsbedingungen des Kraftfahrzeugs erfolgt, wenn der Messwert in einem ersten Wertebereich liegt, und unmittelbar ungeachtet der vorherrschenden Betriebsbedingungen erfolgt, wenn der Messwert in einem zweiten Wertebereich liegt, wobei sich der zweite Wertebereich von dem ersten Wertebereich darin unterscheidet, dass Messwerte aus dem zweiten Wertebereich gewonnen werden, wenn die auf die Spurstange wirkende Kraft höher ist, als wenn Messwerte aus dem ersten Wertebereich gewonnen werden.

9. Verfahren nach Anspruch 8, bei dem die vorbestimmten Betriebsbedingungen, bei denen das Aufheben der Blockade erfolgt, wenn der Messwert im ersten Wertebereich liegt, gegeben sind, wenn das Kraftfahrzeug eine Kurve durchfährt.

10. Verfahren nach einem der Ansprüche 5 bis 9, bei dem nach einer ersten Längenänderung der Spurstange Betriebszustände des Kraftfahrzeugs erfasst werden und bei bestimmten solchen Betriebszuständen ein abermaliges Aufheben der Blockade erfolgt.

11. Verfahren nach einem der Ansprüche 4 bis 10, bei dem nach einer ersten Längenänderung der Spurstange von der auf die Spurstange wirkenden Kraft abhängige weitere Messwerte gewonnen werden und bei bestimmten Eigenschaften dieser Messwerte Signale ausgegeben werden, die von einem Führer des Kraftfahrzeugs wahrnehmbar sind.

12. Verfahren nach einem der Ansprüche 4 bis 11, bei dem die durch das Aufheben der Blockade ermöglichte Längenänderung und damit die Einstellung der Radspur durch eine Vorgabe des Führers des Kraftfahrzeugs bestimmt wird.

## Claims

1. Motor vehicle having a tie rod which comprises a first tie rod part (10) and a second tie rod part (14), wherein the first tie rod part (10) is coupled to a piston housing (12) and the second tie rod part (14) is coupled to a piston (16) in the piston housing (12), which piston separates two hydraulic-fluid-filled chambers (18, 20) in the piston housing (12) from one another, **characterized in that** the two chambers (18, 20) are connected to one another via a line (22) with a controllable valve (24) arranged therein, wherein the motor vehicle also has a control unit (28) for actuating the valve (24) and a sensor (26) is provided for detecting a measurement value of a variable, said measurement value being determined by the force acting on one of the tie rod elements, wherein the sensor (26) is coupled to the control unit (28) in order to supply such measurement values thereto, such that as a function of such measurement values, it can be determined by the control unit (28) when the valve (24) should be opened in order that, under the action of the force acting on said one of the tie rod parts, hydraulic fluid is forced out of one chamber (18, 20) in the piston housing (12) to the other chamber (20, 18) via the line, and in the process, a relative movement takes place between the piston (16) and housing (12) with an associated change in the overall length of the tie rod.

2. Motor vehicle according to Claim 1, having at least one further sensor (34, 36) from which measurement values can be supplied to the control unit (28), such that the control unit (28) is capable of determining, as a function of measurement values of the at least one further sensor (34, 36), a time at which a measurement value to be evaluated should be obtained by means of the sensor (26) for detecting the measurement value determined by the force, and/or a time at which the valve (24) should be opened.

3. Motor vehicle according to Claim 1 or 2, in which the sensor for detecting the measurement value determined by the force is a force sensor (26) on one of the tie rod parts (14).

4. Method for adjusting the wheel toe of a motor vehicle, **characterized by** the steps:
- providing a tie rod which is variable in length, wherein the change in length is realized by means of a self-adjusting mechanism which can be blocked,
- holding the mechanism blocked and obtaining a measurement value which is dependent on the force acting on the tie rod,
- eliminating the blockage as a function of the measurement value, and thereby permitting a change in length by self-adjustment.

5. Method according to Claim 4, in which the change in length is effected by the movement of a piston (16) in a piston housing (12), wherein in the process, the piston (16) forces a hydraulic fluid under the action of the measured force from one of the sides (18, 20) thereof to the other side (20, 18) via a connecting line (22), and wherein a blockage of said mechanism is realized by closing and/or holding closed a valve (24) in the connecting line.

6. Method according to Claim 4 or 5, in which the elimination of the blockage takes place for a time period which is dependent on the measurement value and which determines a change in length which then takes place.

7. Method according to one of Claims 4 to 6, in which the measurement value is obtained under predetermined operating conditions of the motor vehicle, and/or the elimination of the blockage takes place under predetermined operating conditions of the motor vehicle.

8. Method according to Claim 7, in which the elimination of the blockage takes place under first predetermined operating conditions of the motor vehicle if the measurement value lies in a first value range, and takes place directly regardless of the prevailing operating conditions if the measurement value lies in a second value range, wherein the second value range differs from the first value range in that measurement values from the second value range are obtained if the force acting on the tie rod is higher than if measurement values from the first value range are obtained.

9. Method according to Claim 8, in which the predetermined operating conditions under which the elimination of the blockage takes place if the measurement value lies in the first value range are present when the motor vehicle is travelling around a curve.

10. Method according to one of Claims 5 to 9, in which, after a first change in length of the tie rod, operating states of the motor vehicle are detected, and if certain such operating states are present, a repeated elimination of the blockage takes place.

11. Method according to one of Claims 4 to 10, in which, after a first change in length of the tie rod, further measurement values which are dependent on the force acting on the tie rod are obtained and, if said measurement values have certain properties, signals are output which are perceptible to a driver of the motor vehicle.

12. Method according to one of Claims 4 to 11, in which the change in length permitted by the elimination of the blockage, and therefore the adjustment of the wheel toe, is determined by a preset demand of the driver of the motor vehicle.

## Revendications

1. Véhicule automobile comprenant une barre d'accouplement qui comprend une première partie de barre d'accouplement (10) et une deuxième partie de barre d'accouplement (14), la première partie de barre d'accouplement (10) étant accouplée à un boîtier de piston (12) et la deuxième partie de barre d'accouplement (14) étant accouplée à un piston (16) dans le boîtier de piston (12), qui sépare l'un de l'autre deux espaces (18, 20) remplis de fluide hydraulique dans le boîtier de piston (12), **caractérisé en ce que** les deux espaces (18, 20) sont connectés l'un à l'autre par le biais d'une conduite (22) avec une soupape (24) commandable disposée dans celle-ci, le véhicule automobile présentant en outre une unité de commande (28) pour la commande de la soupape (24) et un capteur (26) étant fourni pour détecter une valeur de mesure relative à une grandeur, laquelle valeur de mesure est déterminée par la force agissant sur l'un des éléments de barre d'accouplement, le capteur (26) étant accouplé à l'unité de commande (28) afin d'acheminer à celle-ci de telles valeurs de mesure, de sorte que l'unité de commande (28) puisse établir, en fonction de ces valeurs de mesure, quand la soupape (24) doit être ouverte afin que, sous l'effet de la force agissant sur l'une des parties de barre d'accouplement, du fluide hydraulique soit pressé hors d'un espace (18, 20) dans le boîtier de piston (12) par le biais de la conduite jusqu'à l'autre espace (20, 18) et qu'un mouvement relatif entre le piston (16) et le boîtier (12) ait ainsi lieu en faisant varier la longueur totale de la barre d'accouplement.

2. Véhicule automobile selon la revendication 1, comprenant au moins un autre capteur (34, 36), depuis lequel des valeurs de mesure peuvent être acheminées à l'unité de commande (28), de sorte que l'unité de commande (28) soit en mesure, en fonction de valeurs de mesure de l'au moins un autre capteur (34, 36), d'établir un instant auquel une valeur de mesure à analyser doit être obtenue par le capteur (26) pour détecter la valeur de mesure déterminée par la force, et/ou d'établir un instant auquel la soupape (24) doit être ouverte.

3. Véhicule automobile selon la revendication 1 ou 2, dans lequel le capteur pour détecter la valeur de mesure déterminée par la force est un capteur de force (26) sur l'une des parties de barre d'accouplement (14).

4. Procédé d'ajustement de l'angle de pincement des roues d'un véhicule automobile, **caractérisé par** les étapes suivantes :
- fourniture d'une barre d'accouplement de longueur variable, dans laquelle la variation de longueur s'effectue par le biais d'un mécanisme à auto-ajustement, qui peut être bloqué,
- maintien du mécanisme bloqué et obtention d'une valeur de mesure qui dépend de la force agissant sur la barre d'accouplement,
- suppression du blocage en fonction de la valeur de mesure, ce qui permet ainsi de réaliser une variation de la longueur par auto-ajustement.

5. Procédé selon la revendication 4, dans lequel la variation de longueur est réalisée par déplacement d'un piston (16) dans un boîtier de piston (12), le piston (16) pressant dans ce cas un fluide hydraulique sous l'effet de la force mesurée depuis l'un de ses côtés (18, 20) par le biais d'une conduite de liaison (22) jusqu'à l'autre côté (20, 18), et un blocage de ce mécanisme ayant lieu par fermeture et/ou maintien fermé d'une soupape (24) dans la conduite de liaison.

6. Procédé selon la revendication 4 ou 5, dans lequel la suppression du blocage a lieu pendant une durée dépendant de la valeur de mesure, laquelle durée détermine une variation de longueur s'établissant alors.

7. Procédé selon l'une quelconque des revendications 4 à 6, dans lequel l'obtention de la valeur de mesure a lieu dans des conditions de fonctionnement prédéterminées du véhicule automobile, et/ou la suppression du blocage a lieu dans des conditions de fonctionnement prédéterminées du véhicule automobile.

8. Procédé selon la revendication 7, dans lequel la suppression du blocage a lieu dans des conditions de fonctionnement prédéterminées du véhicule automobile, si la valeur de mesure se situe dans une première plage de valeurs, et a lieu immédiatement indépendamment des conditions de fonctionnement actuelles, si la valeur de mesure se situe dans une deuxième plage de valeurs, la deuxième plage de valeurs se distinguant de la première plage de valeurs par le fait que les valeurs de mesure sont obtenues à partir de la deuxième plage de valeurs lorsque la force agissant sur la barre d'accouplement est plus élevée que lorsque les valeurs de mesures sont obtenues à partir de la première plage de valeurs.

9. Procédé selon la revendication 8, dans lequel les conditions de fonctionnement prédéterminées dans lesquelles a lieu la suppression du blocage, lorsque la valeur de mesure se situe dans la première plage de valeurs, sont présentes lorsque le véhicule automobile passe dans un virage.

10. Procédé selon l'une quelconque des revendications 5 à 9, dans lequel, après une première variation de longueur de la barre d'accouplement, des états de fonctionnement du véhicule automobile sont détectés et, dans le cas de ces états de fonctionnement déterminés, il se produit une nouvelle suppression du blocage.

11. Procédé selon l'une quelconque des revendications 4 à 10, dans lequel, après une première variation de longueur de la barre d'accouplement, d'autres valeurs de mesure dépendant de la force agissant sur la barre d'accouplement sont obtenues et, dans le cas de propriétés déterminées de ces valeurs de mesure, des signaux sont émis, lesquels peuvent être perçus par un conducteur du véhicule automobile.

12. Procédé selon l'une quelconque des revendications 4 à 11, dans lequel la variation de longueur permise par la suppression du blocage, et donc l'ajustement de l'angle de pincement, est déterminée par un ordre préalable du conducteur du véhicule automobile.
